(19)

Europäisches Patentamt
European Patent Office
Office européen des brevets

(11) EP 3 767 500 A1

(12) **EUROPEAN PATENT APPLICATION**

(43) Date of publication:
20.01.2021 Bulletin 2021/03

(21) Application number: 19186721.7

(22) Date of filing: 17.07.2019

(51) Int Cl.:
G06F 21/16 (2013.01)     H04L 29/06 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Nokia Technologies Oy
02610 Espoo (FI)

(72) Inventor: SATHYANARAYANAMURTHY, Kiran
572104 Tumkur (IN)

(74) Representative: Nokia EPO representatives
Nokia Technologies Oy
Karakaari 7
02610 Espoo (FI)

(54) **MULTI-DIMENSIONAL PROTECTION OF CONTENT TRANSMISSION**

(57) A real-time method including: obtaining with a network device a message that is travelling from a source to a destination via one or more intervening nodes and that is protected with a multidimensional protector Mw that has a plurality of components; based on the received message, recognizing a visible component Wn of the multidimensional protector Mw; attempting decoding the visible component Wn using results of physical experiments conducted with the network device; if succeeding to decode the visible component Wn, then generating and adding a next visible component for the multidimensional protector and transmitting the message to next node or to a destination.

Fig. 1

**Description**

**TECHNICAL FIELD**

Various example embodiments relate to multi-dimensional access control in content transmission.

**BACKGROUND**

This section illustrates useful background information without admission of any technique described herein representative of the state of the art.

Digital content transmission can be protected using various technical measures including encryption, cryptographic signing and watermarking.

Watermarking can be used to embed an identifier of a source in some content such the source could be later detected. Watermarking is also sometimes adapted per recipient such that illegal re-distributors of content could be identified. A watermark could also be used as an authentication of digital content such as a piece of art such that a recipient could verify that the content in question has originated from a given author.

The ability of watermarking to indicate the source may also be used to verify the source of data of sensitive nature so as to avoid various frauds and computer system contaminations.

**SUMMARY**

The scope of protection sought for various embodiments is set out by the independent claims. The embodiments and features, if any, described in this specification that do not fall under the scope of the independent claims are to be interpreted as examples useful for understanding various embodiments.

According to a first example aspect of the present invention, there is provided a real-time method, comprising:

obtaining with a network device a message that is travelling from a source to a destination via one or more intervening nodes and that is protected with a multidimensional protector Mw that comprises a plurality of components;

based on the received message, recognizing a visible component Wn of the multidimensional protector Mw;

attempting decoding the visible component Wn using results of physical experiments conducted with the network device;

if succeeding to decode the visible component Wn, then generating and adding a next visible component for the multidimensional protector and transmitting the message to next node or to a destination.

The multidimensional protector Mw may be maintained by a security service provider and accessible through an indication comprised by the message.

The method may further comprise checking whether the message is protected by a protector and if not, transmitting the message to next node, otherwise proceeding after receiving of the message with the network device to the recognizing of the visible component.

The recognizing a visible component Wn based on the received message may be performed using an algorithm that is adapted to a network element that has received the message. The algorithm may be further adapted to a particular dimension indicated by the message. The dimension may be indicated by a hop count of the message. The hop count may be derived from an Internet protocol packet hop counter such as a time to live field.

The recognizing a visible component Wn based on the received message may be performed by accessing a network resource indicated by the message.

The attempting of the decoding of the visible component Wn may be performed using guidance information received from a security service provider that controls the source of the message.

The attempting of the decoding of the visible component Wn may be performed using a diverging and evolving knowledge base.

The method may further comprise predicting one or more dimensions of the protector based on a given dependency of different prediction functions. The dependency may be defined by a connected prediction function strategy, which may be comprise a linear connection and/or graph.

The generating of the next visible component for the multidimensional protector may be based on the predicted one or more dimensions of the protector. The prediction of the one or more dimensions of the multidimensional protector may be based on the transforming vectors produced for the network element and a connection algorithm defining how prediction functions of the network device correspond to those of a previous network device in a communication chain of the message.

The physical experiment results may be obtained by causing the network device to measure one or more physical qualities of themselves and / or of their environment. The measuring may be done before the receiving of the message. The measuring may be done after the receiving of the message.

The physical qualities may comprise one or more optical qualities. The one or optical qualities may be measured using specific radiation pattern experiments on the device. The physical qualities may comprise one or more acoustical qualities. The acoustic qualities may be measured using specific sound pattern experiments. The physical qualities may comprise one or more electrical qualities. The electrical qualities may be measured using specific electrical voltage level detection of the device with a given accuracy such as a set number of decimals. The physical qualities may comprise one or more chemical qualities. The chemical qualities may be measured using an irreversible chemical process with a predictable composition after the chemical experiment. The network device may comprise a chemical synthesizer. The network device may comprise a chemical analyzer.

The physical qualities may comprise one or more mechanical qualities. The mechanical qualities may be measured using a three-dimensional random rotational pattern with device miniaturized under experiment or with the network device itself if the network device is a handheld device.

The method may further comprise obtaining individualized quality information of the network device based on the instructed measuring.

The method may further comprise obtaining $n$ transforming vectors each corresponding to one entity space $E_n$ of the network device based on measurements of a given physical quality, wherein $n>1$.

The method may further comprise obtaining a mixed and encoded multidimensional protector of the network device from the $n$ transforming vectors.

The entity spaces may be mapped to different physical qualities using a mapping function. The mapping function may be defined by the security service provider. The mapping function may be kept secret from the plurality of communication devices. The mapping function may be domain specific. Different entities may be associated with one or more domains. Two or more different entities may be associated with same domain. The security service provider may determine the associated domains of the entities. Once associated domains may be used a number of times for communicating different messages between same or different devices.

The method may be performed by the security service provider. The security service provider may assign individual secure network slices of processing and storage resources to different network devices. The secure network slices may comprise network device specific data and algorithm definitions.

The security service provider may control the secure network slices associated with different nodes to given entity spaces correspondingly to a multidimensional protector that has been formed for a message source.

The prediction functions of the network device may be evolved by the security service provider. The security service provider may update the prediction functions of the network devices by updating respective secure network slices. The security service provider may push the updates of the prediction functions to the secure network slices of respective devices. Alternatively, the secure network slices may request the updates from the security service provider on meeting one or more criteria. The criteria may include lapse of an update interval. The criteria may include receiving a message protected with the multidimensional protector. The criteria may include commencing to form a message protected with the multidimensional protector.

The mapping function may comprise or be any one or more of the following: linear prediction with variable coefficient; multidimensional recurrence relations; generating function; connection pattern in a random graph determined during prediction function generation.

The method may comprise providing the network device with a protector application. The protector application may be provided using a link to a network location dedicated for the network device. The network location may be randomized. The network location may be a uniform network locator or a uniform network identifier or a uniform network name.

The protector application may be configured to hash any measurement results. The obtaining of the transforming vectors may comprise using the hashed measurement results and topical knowledge base defining one-way mapping of the hashed measurement results to the transforming vectors specifically to each physical quality based on which the hashed measurement results are formed.

The method may comprise forming a security association with the security service provider. The forming of the security association may require producing the mixed and encoded multidimensional protector for the network device. The mixed and encoded multidimensional protector may be configured to enable proving that a given network node is the same device for which the mixed and encoded multidimensional protector has been obtained.

The network device may be capable of device to device communication. The network device may be additionally capable of device to communication with a cellular network. The cellular network may be an LTE network. The cellular network may be a 5G network.

According to a second example aspect, there is provided a method comprising:

performing an auto-provisioning of self-provisioning of a network device using an initial secure network slice allocated by the security service provider;

performing by an operator network authentication and authorization of the network device and in result of successful authentication and authorization of the network device:

determining that the self-provisioning was successful; and

generating by the operator network a trigger condition to a security service provider to generate a multidimensional protector Mw and to auto provision a prediction function for this network device in a plurality of network functions.

The method may further comprise detecting by the security service provider that the trigger condition is met and accordingly provisioning by the security service provider the prediction functions to the plurality of network functions.

According to a third example aspect, there is provided a method comprising:

obtaining a protector application;

obtaining experiment instructions using the protector application;

performing one or more experiments according to the experiment instructions;

storing results of the experiments;

cryptographically hashing results of the experiments;

transferring the hashed results to a security service provider; and

obtaining an experiment based multidimensional protector Mw based on the hashing results.

The method may further comprise forming a message and transmitting the message to a destination via one or more nodes. The method may further comprise containing a visible component Wn of the multidimensional protector Mw in the message.

The multidimensional protector Mw may be produced using a combination of an access and mobility management function (AMF) instance identifier, an authentication server function (AUSF) instance identifier, a unified data repository (UDR) instance identifier or a subscription profile in the unified data repository.

According to a fourth example aspect of the present invention, there is provided a computer program comprising computer executable program code configured to execute any method of the first or second example aspect.

The computer program may be stored in a computer readable memory medium.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

According to a fifth example aspect of the present invention, there is provided an apparatus comprising a memory and a processor that are configured to cause the apparatus to perform the method of any example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects. It should be appreciated that corresponding embodiments may apply to other example aspects as well.

## BRIEF DESCRIPTION OF THE DRAWINGS

For a more complete understanding of example embodiments of the present invention, reference is now made to the following descriptions taken in connection with the accompanying drawings in which:

Fig. 1 shows an architectural drawing of a system of an example embodiment;

Fig. 2 shows a block diagram of an apparatus of an example embodiment;

Fig. 3 shows a flow chart of a process of an example embodiment;

Fig. 4 shows a flow chart of a process of an example embodiment;

Fig. 5 shows a flow chart of a process of an example embodiment;

Fig. 6 shows a schematic drawing of some blocks illustrating a multi-entity watermark generation system of an example embodiment;

Fig. 7 shows a schematic drawing of input vector generation of an example embodiment;

Fig. 8 shows a schematic drawing of some blocks illustrating a multi-entity watermark generator of an example embodiment;

Fig. 9 shows a schematic drawing of operation of producing multiple outputs based on multiple inputs for producing of a multi-dimensional watermark, according to an example embodiment;

Fig. 10 shows a schematic drawing of a route of a message from a source to a destination via intermediate nodes, according to an example embodiment;

Fig. 11 shows schematic drawing of a provisioning method of an example embodiment; and

Fig. 12 shows a schematic entity graph and random traversal of an example embodiment.

## DETAILED DESCRIPTON OF THE DRAWINGS

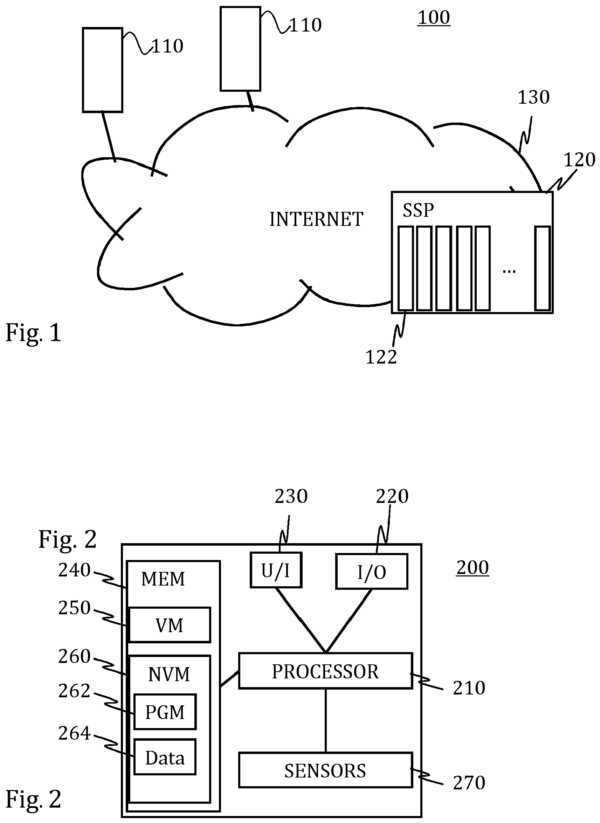

An example embodiment of the present invention and its potential advantages are understood by referring to Figs. 1 through 12 of the drawings. In this document, like reference signs denote like parts or steps.

Fig. 1 shows an architectural drawing of a system 100 of an example embodiment. The system 100 comprises a plurality of network devices 110, such as cellular communication devices or network functions capable of transferring messages between other network devices 110. The system 100 further comprises a security service provider, SSP, 120. The SSP 120 of Fig. 1 is capable of providing separate secure network slices for use by different network devices 110.

Fig. 2 shows a block diagram of an apparatus 200 according to an embodiment. The apparatus 200 is used in some embodiments as the network device 110 and/or as the SSP 120.

The apparatus 200 comprises at least one processing function 210 for controlling the operation of the apparatus 300, an input/output (communication function) 220 for communication with other apparatuses, a user interface 230 for man-machine interfacing, a memory 240 including a volatile or random access memory 250 and a non-volatile memory 260 that comprises computer program code 262 and data 264. The input/output function 220 comprises, for example, any one or more of: a local area network (LAN) port; a wireless local area network (WLAN) unit; Bluetooth unit; cellular data communication unit; and satellite data communication unit. The processing function 210 comprises, for example, any one or more of: a master control unit (MCU); a microprocessor; a digital signal processor (DSP); an application specific integrated circuit (ASIC); a field programmable gate array; a microcontroller; a virtualized processor; and a cloud computing based processing function. The apparatus 200 further comprises one or more sensors 270. In sake of clarity, the sensors are drawn in Fig. 2 separately, although some of the sensors may be comprised by other blocks of Fig. 2 as well. The sensors 270 comprise any one or more of: a camera; a microphone; a voltage detector; a position sensor; an acceleration sensor; a position sensor; a thermometer; a pressure sensor; and a barometer.

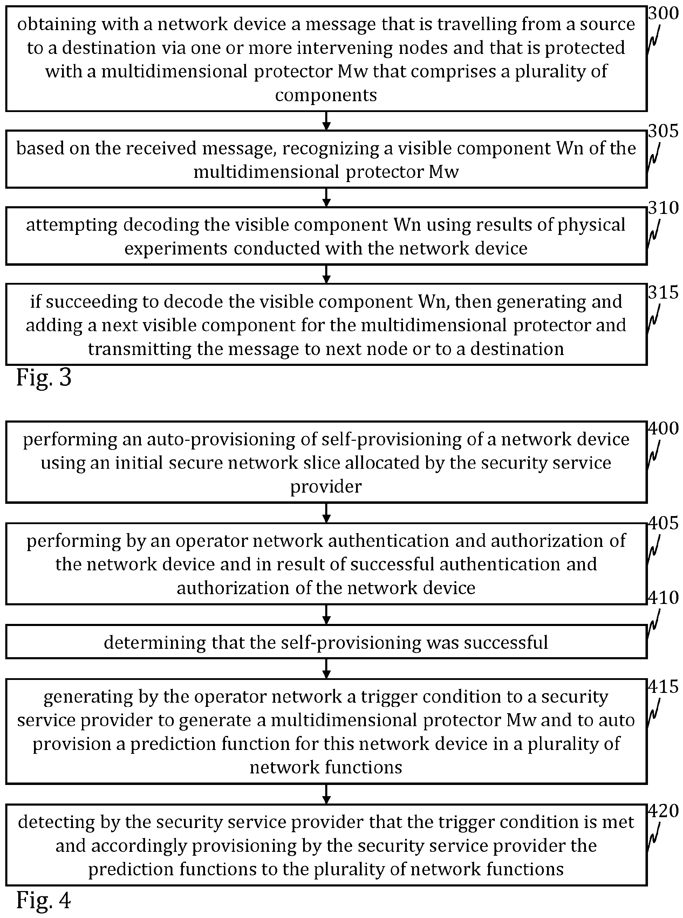

Fig. 3 shows a flow chart of a real-time process of an example embodiment, comprising:

300. obtaining with a network device a message that is travelling from a source to a destination via one or more intervening nodes and that is protected with a multidimensional protector Mw that comprises a plurality of components;
305. based on the received message, recognizing a visible component Wn of the multidimensional protector Mw;
310. attempting decoding the visible component Wn using results of physical experiments conducted with the network device;
315. if succeeding to decode the visible component Wn, then generating and adding a next visible component for the multidimensional protector and transmitting the message to next node or to a destination.

In an example embodiment, the multidimensional protector Mw is maintained by a security service provider and accessible through an indication comprised by the message.

In an example embodiment, the method further comprises checking whether the message is protected by a protector and if not, transmitting the message to next node, otherwise proceeding after receiving of the message with the network device to the recognizing of the visible component.

In an example embodiment, the recognizing a visible component Wn based on the received message is performed using an algorithm that is adapted to a network element that has received the message. In an example embodiment, the algorithm is further adapted to a particular dimension indicated by the message. The dimension may be indicated by a hop count of the message. In an example embodiment, the hop count is derived from an Internet protocol packet hop counter such as a time to live field.

In an example embodiment, the recognizing a visible component Wn based on the received message is performed by accessing a network resource indicated by the message.

In an example embodiment, the attempting of the decoding of the visible component Wn is performed using guidance information received from a security service provider that controls the source of the message.

In an example embodiment, the attempting of the decoding of the visible component Wn is performed using a diverging and evolving knowledge base.

In an example embodiment, the method further comprises predicting one or more dimensions of the protector based on a given dependency of different prediction functions. In an example embodiment, the dependency is defined by a connected prediction function strategy, which may be comprise a linear connection and/or graph.

In an example embodiment, the generating of the next visible component for the multidimensional protector is based on the predicted one or more dimensions of the protector. In an example embodiment, the prediction of the one or more dimensions of the multidimensional protector is based on the transforming vectors produced for the network element and a connection algorithm defining how prediction functions of the network device correspond to those of a previous network device in a communication chain of the message.

In an example embodiment, the physical experiment results are obtained by causing the network device to measure one or more physical qualities of themselves and / or of their environment.

In an example embodiment, the physical qualities comprise one or more optical qualities. A camera of the network device can be used for this purpose. In an example embodiment, the one or optical qualities may be measured using specific radiation pattern experiments on the device.

In an example embodiment, the physical qualities comprise one or more acoustical qualities. In an example embodiment, the acoustic qualities are measured using specific sound pattern experiments using, for example, a microphone of the network device or connected to the network device.

In an example embodiment, the physical qualities comprise one or more electrical qualities. The electrical qualities can be measured using specific electrical voltage level detection of the device with a given accuracy such as a set number of decimals using, for example, circuitries of the network device. Such circuitries may also be used for radio communications, for example.

In an example embodiment, the physical qualities comprise one or more chemical qualities. In an example embodiment, the chemical qualities are measured using an irreversible chemical process with a predictable composition after the chemical experiment. In an example embodiment, the network device comprise a chemical synthesizer. In an example embodiment, the network device comprises a chemical analyzer.

In an example embodiment, the physical qualities comprise one or more mechanical qualities. The mechanical qualities may be measured using a three-dimensional random rotational pattern with device miniaturized under experiment or with the network device itself if the network device is a handheld device.

In an example embodiment, the method further comprises obtaining individualized quality information of the network device based on the instructed measuring.

In an example embodiment, the method further comprises obtaining n transforming vectors each corresponding to one entity space $E_n$ of the network device based on measurements of a given physical quality, wherein $n>1$.

In an example embodiment, the method further comprises obtaining a mixed and encoded multidimensional protector of the network device from the n transforming vectors.

In an example embodiment, the entity spaces are mapped to different physical qualities using a mapping function. In an example embodiment, the mapping function is defined by the security service provider. In an example embodiment, the mapping function is kept secret from the plurality of communication devices. The mapping function may be domain specific. In an example embodiment, different entities can be associated with one or more domains. In an example embodiment, two or more different entities may be associated with same domain. In an example embodiment, the security service provider determines the associated domains of the entities. In an example embodiment, once associated domains can be used a number of times for communicating different messages between same or different devices.

In an example embodiment, the method is performed by the security service provider. In an example embodiment, the security service provider assigns individual secure network slices of processing and storage resources to different network devices. In an example embodiment, the secure network slices comprise network device specific data and algorithm definitions.

In an example embodiment, the security service provider controls the secure network slices associated with different nodes to given entity spaces correspondingly to a multidimensional protector that has been formed for a message source.

In an example embodiment, the prediction functions of the network device can be evolved by the security service provider. In an example embodiment, the security service provider updates the prediction functions of the network devices by updating respective secure network slices. In an example embodiment, the security service provider pushes the updates of the prediction functions to the secure network slices of respective devices. In an alternative example embodiment, the secure network slices request the updates from the security service provider on meeting one or more criteria. In an example embodiment, the criteria include lapse of an update interval. In an example embodiment, the criteria include receiving a message protected with the multidimensional protector. In an example embodiment, the criteria include commencing to form a message protected with the multidimensional protector.

In an example embodiment, the mapping function comprises or is any one or more of the following: linear prediction with variable coefficient; multidimensional recurrence relations; generating function; connection pattern in a random graph determined during prediction function generation.

In an example embodiment, the method comprises providing the network device with a protector application. In an example embodiment, the protector application may is using a link to a network location dedicated for the network device. The network location may be randomized. The network location may be a uniform network locator or a uniform network identifier or a uniform network name.

In an example embodiment, the protector application is configured to hash any measurement results. In an example embodiment, the obtaining of the transforming vectors comprises using the hashed measurement results and topical knowledge base defining one-way mapping of the hashed measurement results to the transforming vectors specifically to each physical quality based on which the hashed measurement results are formed.

In an example embodiment, the method comprises forming a security association with the security service provider. In an example embodiment, the forming of the security association requires producing the mixed and encoded multidimensional protector for the network device. In an example embodiment, the mixed and encoded multidimensional protector is configured to enable proving that a given network node is the same device for which the mixed and encoded multidimensional protector has been obtained.

In an example embodiment, the network device is capable of device to device communication. In an example embodiment, the network device is additionally capable of device to communication with a cellular network. In an example embodiment, the cellular network is an LTE network. The cellular network may be a 5G network.

Fig. 4 shows a flow chart of a process of an example embodiment, comprising:

> 400. performing an auto-provisioning of self-provisioning of a network device using an initial secure network slice allocated by the security service provider;
> 405. performing by an operator network authentication and authorization of the network device and in result of successful authentication and authorization of the network device:
> 410. determining that the self-provisioning was successful; and
> 415. generating by the operator network a trigger condition to a security service provider to generate a multidimensional protector Mw and to auto provision a prediction function for this network device in a plurality of network functions.

In an example embodiment, the method further comprises detecting 420. by the security service provider that the trigger condition is met and accordingly provisioning by the security service provider the prediction functions to the plurality of network functions.

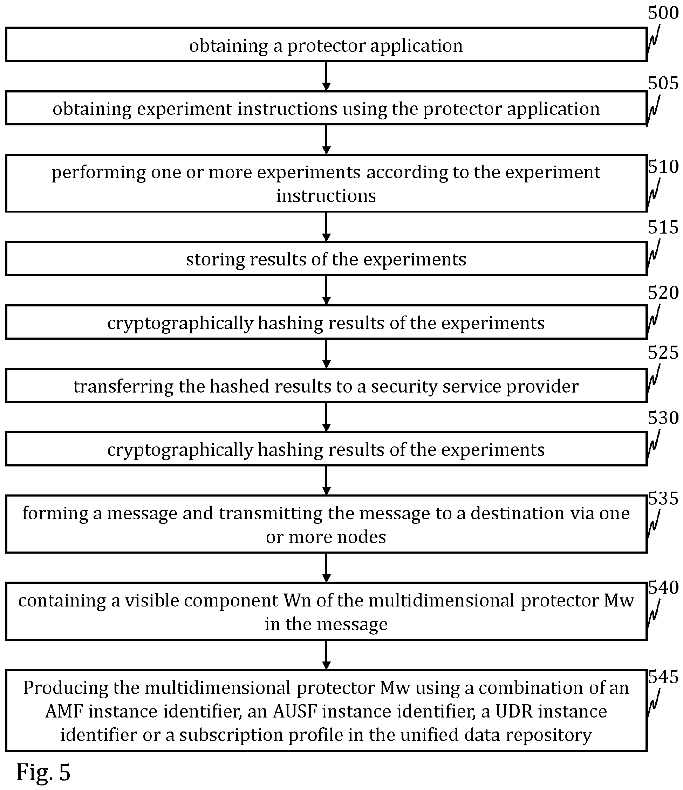

Fig. 5 shows a flow chart of a process of an example embodiment, which process is a real-time method, comprising:

> 500. obtaining a protector application;
> 505. obtaining experiment instructions using the protector application;
> 510. performing one or more experiments according to the experiment instructions;
> 515. storing results of the experiments;
> 520. cryptographically hashing results of the experiments;
> 525. transferring the hashed results to a security service provider; and
> 530. obtaining an experiment based multidimensional protector Mw based on the hashing results.

In an example embodiment, the method further comprises forming 535. a message and transmitting the message to a destination via one or more nodes. In an example embodiment, the method further comprises containing 540. a visible component Wn of the multidimensional protector Mw in the message.

In an example embodiment, the multidimensional protector Mw is produced 545. using a combination of an AMF instance identifier, an AUSF instance identifier, a UDR instance identifier or a subscription profile in the unified data repository.

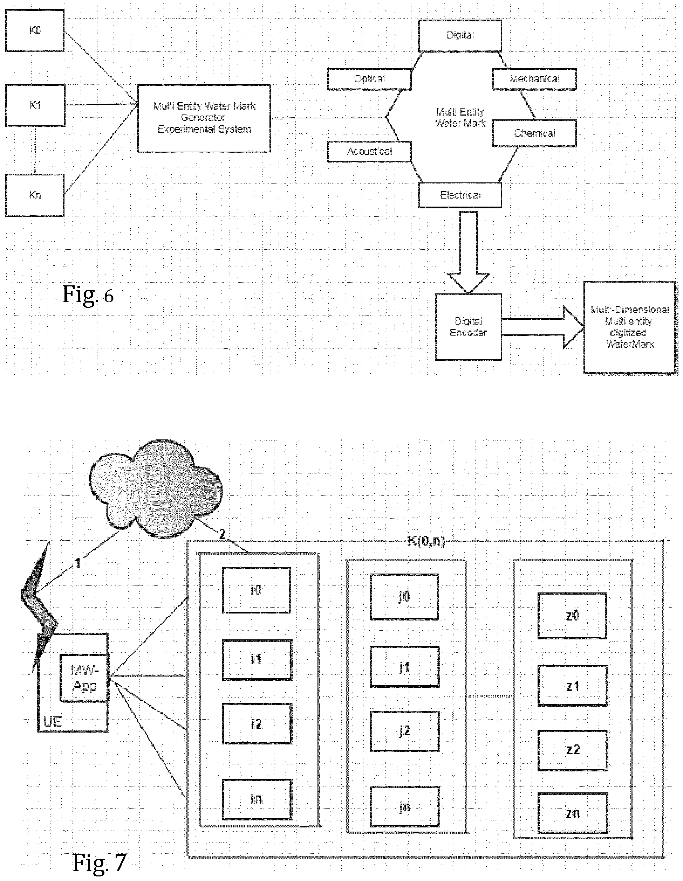

Fig. 6 shows a schematic drawing of some blocks illustrating a multi-entity watermark generation system of an example embodiment making use of an optical water mark as an example of a multi-dimensional protector. The digital water mark is produced as one entity may be produced using combination of AMF instance ID, AUSF instance ID, UDR instance ID or Subscription profile in UDR. Also an optical water mark as one entity can be produced using specific radiation pattern experiments on the device. An acoustical watermark can be produced using specific sound pattern experiments. An electrical watermark can be produced using specific electrical voltage level of the device accuracy up to certain decimal digits. A chemical watermark can be produced using irreversible chemical process but with predictable composition after the chemical experiment. Furthermore, a mechanical watermark can be produced, e.g., using a 3D random rotational pattern with device miniaturized under experiment.

In an example embodiment, these experiments are be induced to network device. In another example embodiment, the experiments or their results are offloaded to the SSP 120. The production and control of water mark can be performed by the SSP 120.

Fig. 7 shows a schematic drawing of input vector generation of an example embodiment. An application Mw-App is installed in the network device 110 from a dedicated secured network slice 122. The Mw-App generates an input vectors K(0,n) and transmits same to the SSP 120, or more specifically in this embodiment to a secured network slice 122. These input vectors K(0,n) are stored securely for a security context.

The input vectors K (0,n) comprise a plurality of vectors inside for i(0,n),j(0,n)...z(0,n). Each of these vectors represent the device specific or unique characteristics mapping to entities described as sides of hexagon in Fig. 7.

The Mw-App builds the input vectors K(0,n) based on entity specific experiments which produce the unique characteristic that can identify the device in many dimensions. In an example embodiment, the Mw-App offloads the generation of the input vectors K (0,n) so that the SSP will perform the extracting of the inputs from measurements caused by the Mw-App that are specific to entities.

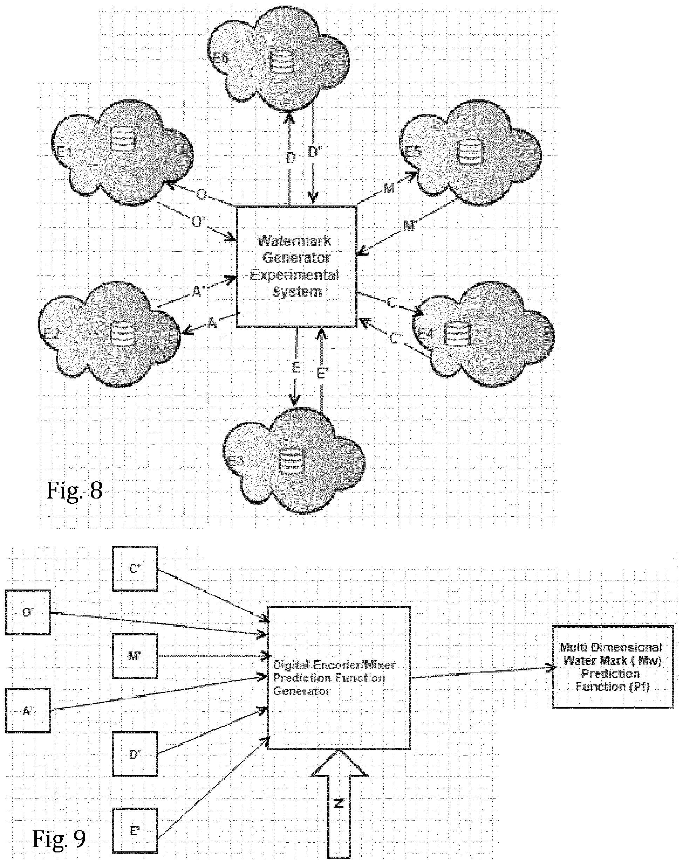

Fig. 8 shows a schematic drawing of the generation of the input vector discussed in connection with Fig. 7. Fig. 8 illustrates the input vectors K (0,n) that fed to a generator function in the SSP 120 that generates a multi-entity water mark that can map to a knowledge base of each entity, i.e. corresponding to different physical qualities.

The generator extracts (O, A, E, C, M, D) from the input vectors K(0,n) and pushes each element (i.e., each messaging device on a path of a message) to a corresponding Entity space En. The entity space En runs an algorithm that maps to unique knowledge of that domain and generates a corresponding set (O', A', E', C', M', D'). This set forms topic vectors. The set is a unique combination for a given identity. In an example embodiment, the topics are varied and extended over time i.e. evolve.

For example C' can point to new chemical reaction identified for a topic ex. Sodium and it evolves based on time factor. This evolution is automatic and not identifiable.

Fig. 9 shows a digital encoder that produces multiple outputs based on the multiple inputs discussed in the foregoing. In Fig. 9, N is the number of nodes which a water mark (or protector generally) needs to traverse and Mw is a multidimensional watermark having n dimensions so that Mw can be represented as a sequence of watermark components as Mw = (W0, W1, W2... Wn). The elements in the Mw are a predictable sequence by using the experiment system and prediction functions Pf = (P0, P1, P2, ... Pn) generated with watermark components.

In Fig. 9, the topics vectors (O', A', E', C', M', D') are fed to the digital encoder / mixer which takes an input N (number of hops) to generate the multi-dimensional watermark Mw (W0, W1, W2, W3,.....Wn) and the set of the prediction functions Pf (P0, P1, P2, P3,.....Pn), wherein:

$$W2 = P1(W1)$$

$$W3 = P2(w2)$$

$$..$$

$$Wn = Pn\text{-}1(Wn\text{-}1)$$

where n > 1

The prediction functions are connected, for example, to the path and node of the networks. In an example embodiment, any node can do a lookup to their dedicated secured network slices 122 to get the prediction function for a given Mw. Hence:

when a Node1 receives a packet, it must know W1.

when a Node2 from Node1 receives a packet, it must know that W2 implies the function Pf2 at Node2 operates on W1 to generate W2

when a Node3 from Node 2 receives a packet, it must know that W3 implies the function Pf3 at Node3 operates on W2 to generate W3.

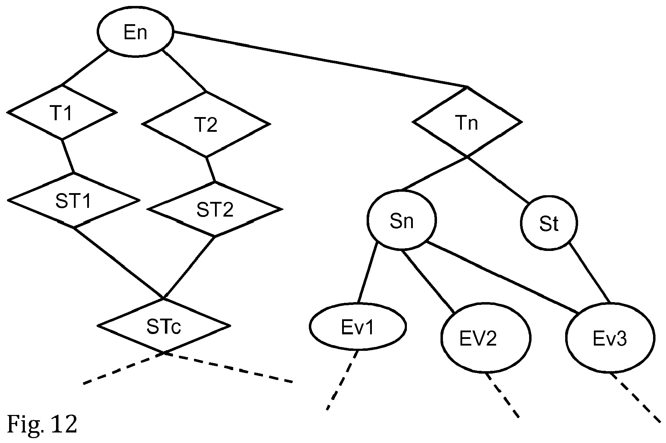

The Prediction functions are cryptographic functions connected, for example, as graphs and a random traversal (see Fig. 12) is picked for function selection.

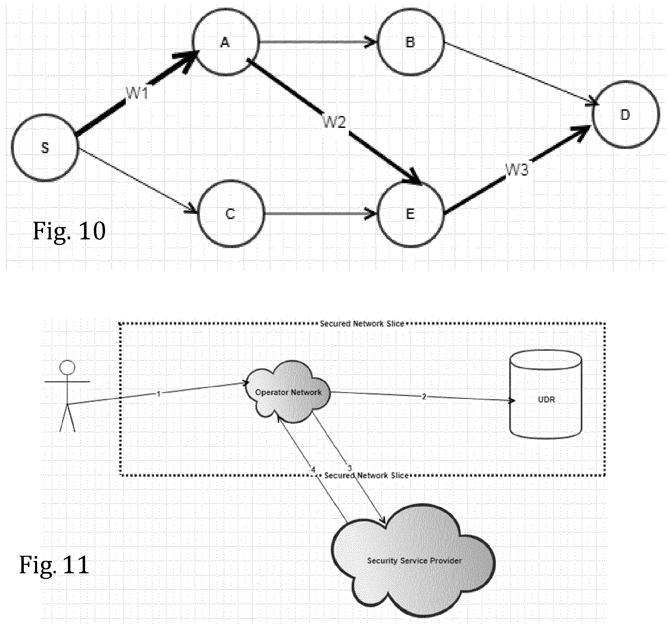

Fig. 10 shows an example of a travel of a message from a source to destination over one or more nodes in between. Predictive attacks are resisted on the travel so that path S,A maps to the component W1, path A, E maps to the component W2 and path E to D maps to the component W3.

Fig. 11 shows a schematic drawing of the provisioning of the prediction functions the network device 110 making use of the UDR. In step 1, a user's network device performs automatic self-provisioning using initial secured network slice 122 allocated by SPP 120. In step 2, the operator network performs authentication and authorization when the self-provisioning was successful. In step 3, the operator network generates a trigger to the SSP 120 to generate the multi-dimensional protector or watermark Mw and to automatically provision the prediction functions for this network device 110 (e.g., user equipment) in network functions required for transferring messages to or from the user's network device 110. In response, the SSP 120 provisions the prediction functions to those network functions.

Notes:

1. if any component of the Mw is tampered, the fraud can be detected and the source can be tracked specific to address of tampering.
2. the end user can request network to regenerate the multidimensional watermark Mw and the prediction functions.
3. The SSP 120 can also initiate renewal of the Mw and prediction functions.

Example Application and Analysis:

Use case 1: Prevention/Detection of untrusted data interception

Assume the case where subscriber data is provisioned in the UDR and the UDM is processing a profile. Now, it is possible that some operator can switch on a trace or create a Fake end point to get the subscriber details.

How to prevent this?

Refer to Fig. 11.

Details: A W-Bit needs to be enabled in the fake machine that prompt for proper prediction function. Since a fake endpoint or node was not considered as part of a network slice 122, it cannot see the message.
Fig. 12 shows a schematic entity graph and random traversal of an example embodiment. A knowledge database representation related to the entities as one snap shot by Fig. 12.
As n can approach infinity and so will do specific topics in the Entity KB, wherein ST(1,n) are sub-topics. Ev1(1,n) are evolving topics that might at a later stage get matured to become sub-topics and ST and then to topics T.
A genetic algorithm can be used to get highly matured topics in the entity knowledge base. Measuring a fitness factor based on the depth makes the watermark robust against predictive attacks.
An example for setting algorithms for generating K[0,N] is next presented:

```
void generateInputVectorsFromSource (Entity E[0,m])
{
     K[0,n] = {i...z}
     For (e = E. Begin (); e != E.end(); e++)
     {
       K[e]= extractParameters(e);
     }
        Foreach element in K
       randomShuffle(K[element])
        return K
}
```

The extractParameters function has specifications for each entity preconfigured by the operator.
Without in any way limiting the scope, interpretation, or application of the claims appearing below, a technical effect of one or more of the example embodiments disclosed herein is that a message or network protection may be enhanced. Network slices can be dynamically allocated for transactions between the Mw-App, SSP and network nodes so that an attacker cannot even know the slice and its specific IP and ports and the streams or the transport methods used.. Another technical effect of one or more of the example embodiments disclosed herein is that malicious network resource use attempt can be detected from a fake prediction function in that an attacker fails to generate a component of the multidimensional watermark. Yet another technical effect of one or more of the example embodiments disclosed herein is that the multi-dimensional protector is not even visible at any nodes. The multidimensional protector may solely reside in the SSP.
Embodiments of the present invention may be implemented in software, hardware, application logic or a combination of software, hardware and application logic. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects are set out in the independent claims, other aspects comprise other combinations of features from the described embodiments and/or the dependent claims with the features of the independent claims, and not solely the combinations explicitly set out in the claims.

It is also noted herein that while the foregoing describes example embodiments , these descriptions should not be viewed in a limiting sense. Rather, there are several variations and modifications which may be made without departing from the scope of the present invention as defined in the appended claims.

**Claims**

1. A real-time method, comprising:

   obtaining with a network device a message that is travelling from a source to a destination via one or more intervening nodes and that is protected with a multidimensional protector Mw that comprises a plurality of components;
   based on the received message, recognizing a visible component Wn of the multidimensional protector Mw;
   attempting decoding the visible component Wn using results of physical experiments conducted with the network device;
   if succeeding to decode the visible component Wn, then generating and adding a next visible component for the multidimensional protector and transmitting the message to next node or to a destination.

2. The method of claim 1, wherein:

   the recognizing a visible component Wn based on the received message is performed using an algorithm that is adapted to a network element that has received the message; and
   the algorithm is further adapted to a particular dimension indicated by the message.

3. The method of claim 1 or 2, wherein:
   the attempting of the decoding of the visible component Wn is performed using guidance information received from a security service provider that controls the source of the message.

4. The method of any one of preceding claims, wherein the attempting of the decoding of the visible component Wn is performed using a diverging and evolving knowledge base.

5. The method of any one of preceding claims, wherein:

   the method further comprises predicting one or more dimensions of the protector based on a given dependency of different prediction functions; and
   the generating of the next visible component for the multidimensional protector is based on the predicted one or more dimensions of the protector.

6. The method of claim 5, wherein the prediction of the one or more dimensions of the multidimensional protector is based on the transforming vectors produced for the network element and a connection algorithm defining how prediction functions of the network device correspond to those of a previous network device in a communication chain of the message.

7. The method of any one of preceding claims, wherein the physical experiment results are obtained by causing the network device to measure one or more physical qualities of themselves and / or of their environment.

8. The method of any one of preceding claims, wherein the method further comprises obtaining individualized quality information of the network device based on the instructed measuring.

9. The method of any one of preceding claims, wherein:

the method further comprises obtaining n transforming vectors each corresponding to one entity space En of the network device based on measurements of a given physical quality, wherein n>1; and

the method further comprises obtaining a mixed and encoded multidimensional protector of the network device from the n transforming vectors.

10. The method of claim 9, wherein:

the entity spaces are mapped to different physical qualities using a mapping function;

the mapping function is defined by the security service provider; and

the mapping function is kept secret from the plurality of communication devices.

11. A real-time method, comprising:

obtaining a protector application;

obtaining experiment instructions using the protector application;

performing one or more experiments according to the experiment instructions;

storing results of the experiments;

cryptographically hashing results of the experiments;

transferring the hashed results to a security service provider; and

obtaining an experiment based multidimensional protector Mw based on the hashing results.

12. The method of claim 11, further comprising:

forming a message and transmitting the message to a destination via one or more nodes; and

containing a visible component Wn of the multidimensional protector Mw in the message.

13. The method of claim 12, wherein the multidimensional protector Mw is produced using a combination of an access and mobility management function instance identifier; an authentication server function instance identifier; a unified data repository instance identifier; or a subscription profile in the unified data repository.

14. An apparatus, comprising at least one processing function configured to cause performing the method of any one of the preceding claims.

15. A computer program comprising computer executable program code which, when executed, causes an apparatus to perform the method of any one of claims 1 to 13.

100

110

110

130

120

SSP

INTERNET

...

122

Fig. 1

Fig. 2

230

220

240 — MEM

U/I

I/O

200

250 — VM

260 — NVM

PROCESSOR

210

262 — PGM

264 — Data

SENSORS

270

Fig. 2

obtaining with a network device a message that is travelling from a source to a destination via one or more intervening nodes and that is protected with a multidimensional protector Mw that comprises a plurality of components

300

based on the received message, recognizing a visible component Wn of the multidimensional protector Mw

305

attempting decoding the visible component Wn using results of physical experiments conducted with the network device

310

if succeeding to decode the visible component Wn, then generating and adding a next visible component for the multidimensional protector and transmitting the message to next node or to a destination

315

Fig. 3

performing an auto-provisioning of self-provisioning of a network device using an initial secure network slice allocated by the security service provider

400

performing by an operator network authentication and authorization of the network device and in result of successful authentication and authorization of the network device

405

410

determining that the self-provisioning was successful

generating by the operator network a trigger condition to a security service provider to generate a multidimensional protector Mw and to auto provision a prediction function for this network device in a plurality of network functions

415

detecting by the security service provider that the trigger condition is met and accordingly provisioning by the security service provider the prediction functions to the plurality of network functions

420

Fig. 4

```
                                                              500
┌──────────────────────────────────────────────────────────┐ ⌐
│              obtaining a protector application             │
└──────────────────────────────────────────────────────────┘
                            │
                            ▼                                 505
┌──────────────────────────────────────────────────────────┐ ⌐
│  obtaining experiment instructions using the protector application │
└──────────────────────────────────────────────────────────┘
                            │
                            ▼                                 510
┌──────────────────────────────────────────────────────────┐ ⌐
│  performing one or more experiments according to the experiment │
│                       instructions                         │
└──────────────────────────────────────────────────────────┘
                            │
                            ▼                                 515
┌──────────────────────────────────────────────────────────┐ ⌐
│             storing results of the experiments             │
└──────────────────────────────────────────────────────────┘
                            │
                            ▼                                 520
┌──────────────────────────────────────────────────────────┐ ⌐
│       cryptographically hashing results of the experiments │
└──────────────────────────────────────────────────────────┘
                            │
                            ▼                                 525
┌──────────────────────────────────────────────────────────┐ ⌐
│    transferring the hashed results to a security service provider │
└──────────────────────────────────────────────────────────┘
                            │
                            ▼                                 530
┌──────────────────────────────────────────────────────────┐ ⌐
│       cryptographically hashing results of the experiments │
└──────────────────────────────────────────────────────────┘
                            │
                            ▼                                 535
┌──────────────────────────────────────────────────────────┐ ⌐
│  forming a message and transmitting the message to a destination via one │
│                      or more nodes                         │
└──────────────────────────────────────────────────────────┘
                            │
                            ▼                                 540
┌──────────────────────────────────────────────────────────┐ ⌐
│  containing a visible component Wn of the multidimensional protector Mw │
│                      in the message                        │
└──────────────────────────────────────────────────────────┘
                            │
                            ▼                                 545
┌──────────────────────────────────────────────────────────┐ ⌐
│  Producing the multidimensional protector Mw using a combination of an │
│    AMF instance identifier, an AUSF instance identifier, a UDR instance │
│    identifier or a subscription profile in the unified data repository │
└──────────────────────────────────────────────────────────┘
```

Fig. 5

Fig. 6

Fig. 7

Fig. 8

Fig. 9

Fig. 10

Fig. 11

Fig. 12

Europäisches
Patentamt

European
Patent Office

Office européen
des brevets

# EUROPEAN SEARCH REPORT

**Application Number**

EP 19 18 6721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/316682 A1 (TWITCHELL JR ROBERT W [US] ET AL) 24 December 2009 (2009-12-24) | 1-6,14, 15 | INV. G06F21/16 H04L29/06 |
| Y | * the whole document * | 7-10 | |
| X | US 2019/044726 A1 (MACIEIRA THIAGO [US] ET AL) 7 February 2019 (2019-02-07) * paragraph [0001] - paragraph [0132]; figures 4,6,7,8 * | 1-10,14, 15 | |
| Y | OZDEMIR S ET AL: "Secure data aggregation in wireless sensor networks: A comprehensive overview", COMPUTER NETWORKS, ELSEVIER, AMSTERDAM, NL, vol. 53, no. 12, 13 August 2009 (2009-08-13), pages 2022-2037, XP026222997, ISSN: 1389-1286, DOI: 10.1016/J.COMNET.2009.02.023 [retrieved on 2009-03-24] * page 13 * | 7-10 | |

**TECHNICAL FIELDS SEARCHED (IPC)**

G06F
H04L

~~The present search report has been drawn up for all claims~~

| Place of search | Date of completion of the search | Examiner |
|---|---|---|
| Munich | 19 December 2019 | Yanai, Yoav |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 14, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 19 18 6721

The Search Division considers that the present European patent application does not comply with the requirements of unity of invention and relates to several inventions or groups of inventions, namely:

1. claims: 1-10, 14, 15

   a method performed in a multi-hop network (i.e. a MANET, a mesh network or equivalent, wherein the path between a source node of a message and a destination node of the message comprises at least one of an intermediate node), wherein at each intermediate node on the path between the source and the end node, a multidimensional element is used to protect the message relayed along the path.
   ---

2. claims: 11-13

   A method comprising the hashing of results of what is defined as "experiment" or "experiments" and their transfer to what is termed as "security service provider".
   ---

## ANNEX TO THE EUROPEAN SEARCH REPORT
## ON EUROPEAN PATENT APPLICATION NO.

EP 19 18 6721

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2019

| Patent document cited in search report | Publication date | Patent family member(s) | Publication date |
|---|---|---|---|
| US 2009316682 A1 | 24-12-2009 | US 2009316682 A1<br>US 2011289320 A1<br>US 2014123227 A1 | 24-12-2009<br>24-11-2011<br>01-05-2014 |
| US 2019044726 A1 | 07-02-2019 | NONE | |

EPO FORM P0459

For more details about this annex : see Official Journal of the European Patent Office, No. 12/82